# EUROPEAN PATENT APPLICATION

(11) **EP 4 579 882 A1**
(43) Date of publication of application: **02.07.2025**
(21) Application number: 23901923.5
(22) Date of filing: 02.03.2023
(51) Int. Cl.: H01M 10/615, H01M 10/658, H01M 10/625, H01M 50/209

(54) **BATTERY AND ELECTRICAL APPARATUS**

(30) Priority: 13.12.2022 CN 202223328119 U
(71) Applicant: Contemporary Amperex Technology Co., Limited, Ningde, Fujian 352100 (CN)
(72) Inventor: TANG, Yu, Ningde, Fujian 352100 (CN); HUANG, Xiaoteng, Ningde, Fujian 352100 (CN); WANG, Wenli, Ningde, Fujian 352100 (CN); XU, Chenyi, Ningde, Fujian 352100 (CN); YANG, Haiqi, Ningde, Fujian 352100 (CN); WANG, Peng, Ningde, Fujian 352100 (CN)
(74) Representative: Gong, Jinping
(86) International application number: PCT/CN2023/079341
(87) International publication number: WO 2024/124705

(57) **Abstract**

Embodiments of this application provide a battery and an electric apparatus. The battery includes a battery cell group and a thermal management means. The battery cell group includes a plurality of battery cells, and the thermal management means is configured to regulate temperature of the battery cell group, where at least two surfaces of the battery cell are thermally connected to the thermal management means. The embodiments of this application can increase a heat exchange area of the battery cell, allowing the thermal management means to have higher thermal management efficiency for the battery cell. This in turn can meet the cooling requirements of the battery under higher current or faster charging conditions and meet the heating requirements of the battery in lower temperature environments, thereby improving safety and service life of the battery.

## Description

### CROSS-REFERENCE TO RELATED APPLICATIONS

This application claims priority to Chinese Patent Application CN2022233281190, filed on December 13, 2022 and entitled "BATTERY AND ELECTRIC APPARATUS", which is incorporated herein by reference in its entirety.

### TECHNICAL FIELD

This application relates to the field of battery technologies, and specifically, to a battery and an electric apparatus.

### BACKGROUND

Energy conservation and emission reduction are crucial to the sustainable development of the automobile industry. Electric vehicles, with their advantages in energy conservation and environmental protection, have become an important part of the sustainable development of the automobile industry. For electric vehicles, battery technology is an important factor in connection with their development.

In battery technology, how the safety of batteries is improved is an urgent technical problem to be solved.

### SUMMARY

Embodiments of this application provide a battery and an electric apparatus, so as to effectively improve energy density and safety of the battery.

According to a first aspect, this application provides a battery including:
a battery cell group including a plurality of battery cells; and
a thermal management means configured to regulate temperature of the battery cell group;
where at least two surfaces of the battery cell are thermally connected to the thermal management means.

In the technical solution of this application, at least two surfaces of the battery cell are thermally connected to the thermal management means, which can increase a heat exchange area of the battery cell, allowing the thermal management means to have higher thermal management efficiency for the battery cell. This in turn can meet the cooling requirements of the battery under higher current or faster charging conditions and meet the heating requirements of the battery in lower temperature environments, thereby improving safety and service life of the battery.

According to some embodiments of this application, the thermal management means includes a plurality of first thermal management components, the plurality of first thermal management components are spaced apart in a first direction, and at least one of the battery cells is provided between adj acent two of the first thermal management components; where
the battery cell has two first surfaces disposed opposite each other in the first direction, and the two first surfaces of the battery cell are thermally connected to the two first thermal management components respectively.

In the foregoing technical solution, at least one of the battery cells is sandwiched between adjacent two of the first thermal management components, such that the two adjacent first thermal management components can limit and support the battery cell, reducing the probability of deformation caused by mutual compression of the plurality of battery cells. In addition, the first thermal management component can also resist swelling of the battery cell, which is conducive to enhancing structural stability of the battery. The two first surfaces of the battery cell are thermally connected to the two first thermal management components respectively, such that the battery cell can exchange heat through the two first surfaces, resulting in more uniform distribution of the heat exchange area, thereby helping to further enhance performance stability of the battery.

According to some embodiments of this application, the first thermal management component forms a first heat exchange chamber for accommodating a heat exchange medium, and the first heat exchange chambers of the plurality of first thermal management components communicate with each other.

In the foregoing technical solution, with the first thermal management component forming the first heat exchange chamber for accommodating the heat exchange medium, and the first heat exchange chambers of the plurality of first thermal management components communicating with each other, fluidity of the heat exchange medium in the heat exchange chamber can be effectively improved, thereby further enhancing heat exchange efficiency of the thermal management means. In addition, compared to an isolated heat exchange chamber structure, the plurality of first heat exchange chambers communicating with each other can reduce the number of fluid inlet and outlet structures, and in turn reduce space occupied by the fluid inlet and outlet structures, helping to further increase energy density of the battery.

According to some embodiments of this application, a plurality of battery cells arranged in a second direction are provided between adjacent two of the first thermal management components, the second direction being perpendicular to the first direction.

In the foregoing technical solution, compared to the structure where the battery cell is sandwiched between two separately disposed adjacent first thermal management components, the plurality of battery cells arranged in the second direction sharing two first thermal management components can simplify the structure and production and mounting processes of the thermal management means, and reduce the number of first thermal management components, thereby decreasing additional structures (for example, mounting and fixing structures) of the first thermal management components. This can reduce space occupied by the additional structures of the first thermal management components while reducing production costs of the battery, helping to increase the energy density of the battery.

According to some embodiments of this application, the thermal management means further includes a plurality of second thermal management components, the plurality of second thermal management components are spaced apart in the second direction, and at least one of the battery cells is provided between adjacent two of the second thermal management components; where
the battery cell has two second surfaces disposed opposite each other in the second direction, and the two second surfaces of the battery cell are thermally connected to the two second thermal management components respectively.

In the foregoing technical solution, at least one of the battery cells is sandwiched between adj acent two of the second thermal management components, such that the two adjacent second thermal management components can limit and support the battery cell, reducing the probability of deformation caused by mutual compression of the plurality of battery cells. In addition, the second thermal management component can also resist swelling of the battery cell, which is conducive to enhancing the structural stability of the battery. The two second surfaces of the battery cell are thermally connected to the two second thermal management components respectively, such that the battery cell can exchange heat through the two second surfaces, further resulting in more uniform distribution of the heat exchange area of the battery cell, thereby helping to further enhance the performance stability of the battery.

According to some embodiments of this application, the first thermal management component forms a first heat exchange chamber for accommodating a heat exchange medium, the second thermal management component forms a second heat exchange chamber for accommodating a heat exchange medium, and the second heat exchange chamber communicates with the first heat exchange chamber.

In the foregoing technical solution, with the second thermal management component forming the second heat exchange chamber for accommodating the heat exchange medium, and the second heat exchange chamber communicating with the first heat exchange chamber, the fluidity of the heat exchange medium in the heat exchange chamber can be effectively improved, thereby further enhancing the heat exchange efficiency of the thermal management means. In addition, compared to an isolated heat exchange chamber structure, the plurality of second heat exchange chambers communicating with the plurality of first heat exchange chambers can reduce the number of fluid inlet and outlet structures, and in turn reduce the space occupied by the fluid inlet and outlet structures, helping to further increase the energy density of the battery.

According to some embodiments of this application, the thermal management means further includes a third thermal management component, and the third thermal management component is disposed on a side of the battery cell group in a third direction, the third direction being perpendicular to the first direction; where
the battery cell has a third surface, and the third surface of the battery cell is thermally connected to the third thermal management component.

In the foregoing technical solution, the third surface of the battery cell is thermally connected to the third thermal management component, such that the battery cell can exchange heat through the third surface, further resulting in more uniform distribution of the heat exchange area of the battery cell, thereby helping to further enhance the performance stability of the battery.

According to some embodiments of this application, the first thermal management component forms a first heat exchange chamber for accommodating a heat exchange medium, the third thermal management component forms a third heat exchange chamber for accommodating a heat exchange medium, and the third heat exchange chamber communicates with the first heat exchange chamber.

In the foregoing technical solution, with the third thermal management component forming the third heat exchange chamber for accommodating the heat exchange medium, and the third heat exchange chamber communicating with the first heat exchange chamber, the fluidity of the heat exchange medium in the heat exchange chamber can be effectively improved, thereby further enhancing the heat exchange efficiency of the thermal management means. In addition, compared to an isolated heat exchange chamber structure, the plurality of third heat exchange chambers communicating with the plurality of first heat exchange chambers can reduce the number of fluid inlet and outlet structures, and in turn reduce the space occupied by the fluid inlet and outlet structures, helping to further increase the energy density of the battery.

According to some embodiments of this application, the battery cell further has a fourth surface, the fourth surface and the third surface are disposed opposite each other in the third direction, and an electrode terminal of the battery cell is disposed on the fourth surface.

In the foregoing technical solution, the first surface, second surface, and third surface of the battery cell provided with no electrode terminal are thermally connected to the thermal management means to exchange heat, which can reduce the impact of the electrode terminal on the heat exchange between the battery cell and the thermal management means.

According to some embodiments of this application, the battery cell further has a fourth surface, and an electrode terminal of the battery cell is disposed on the fourth surface; and the thermal management means further includes a fourth thermal management component, and the fourth thermal management component is disposed on a side of the battery cell group in a third direction, where the fourth surface of the battery cell is thermally connected to the fourth thermal management component, the third direction being perpendicular to the first direction.

In the foregoing technical solution, the fourth surface of the battery cell is thermally connected to the fourth thermal management component, such that the battery cell can exchange heat through the fourth surface, further resulting in more uniform distribution of the heat exchange area of the battery cell, thereby helping to further enhance the performance stability of the battery. In addition, the fourth thermal management component can also fit with the third thermal management component to limit the battery cell, and can resist swelling of the battery cell, which is conducive to enhancing the structural stability of the battery.

According to some embodiments of this application, observed along the third direction, the fourth thermal management component does not overlap with the electrode terminal of the battery cell.

In the foregoing technical solution, observed along the third direction, the fourth thermal management component does not overlap with the electrode terminal of the battery cell, such that the impact of the fourth thermal management component on the connection between the electrode terminal and other components can be reduced.

According to some embodiments of this application, a pressure relief mechanism is provided on the fourth surface of the battery cell, and observed along the third direction, the fourth thermal management component does not overlap with the pressure relief mechanism.

In the foregoing technical solution, observed along the third direction, the fourth thermal management component does not overlap with the pressure relief mechanism, such that the impact of the fourth thermal management component on the pressure relief of the pressure relief mechanism can be reduced, thereby reducing the impact on the safety of the battery.

According to some embodiments of this application, the fourth thermal management component is provided in plurality, the fourth thermal management component extends along the first direction, and the plurality of fourth thermal management components are spaced apart in a second direction, the first direction, the second direction, and the third direction being perpendicular to each other.

In the foregoing technical solution, the plurality of fourth thermal management components provided result in a larger heat exchange area of the fourth thermal management components with the battery cells, allowing for higher heat exchange efficiency.

According to some embodiments of this application, the thermal management means further includes a fluid collecting component, the fluid collecting component connects the plurality of fourth thermal management components, the fourth thermal management component forms a fourth heat exchange chamber for accommodating a heat exchange medium, and the fluid collecting component forms a fluid collecting chamber for accommodating a heat exchange medium, where the fourth heat exchange chamber communicates with the fluid collecting chamber.

In the foregoing technical solution, with the fluid collecting component connecting the plurality of fourth thermal management components, the structure of the plurality of fourth thermal management components can be more stable, resulting in higher overall structural strength of the battery. With the fourth heat exchange chambers of the plurality of fourth thermal management components communicating with the fluid collecting chamber of the fluid collecting component, the fluidity of the heat exchange medium in the heat exchange chamber can be effectively improved, thereby further enhancing the heat exchange efficiency of the thermal management means. In addition, compared to an isolated heat exchange chamber structure, the plurality of fourth heat exchange chambers communicating with the fluid collecting chamber can reduce the number of fluid inlet and outlet structures, and in turn reduce the space occupied by the fluid inlet and outlet structures, helping to further increase the energy density of the battery.

According to some embodiments of this application, the fluid collecting component is provided in two, the two fluid collecting components are spaced apart in the first direction, and two ends of the fourth thermal management component are connected to the two fluid collecting components respectively.

In the foregoing technical solution, with the two fluid collecting components provided, the two ends of the fourth thermal management component can be connected to the two fluid collecting components respectively, which can further improve the fluidity of the heat exchange medium in the heat exchange chamber, thereby further enhancing the heat exchange efficiency of the thermal management means.

According to some embodiments of this application, the first thermal management component forms a first heat exchange chamber for accommodating a heat exchange medium, the fourth thermal management component forms a fourth heat exchange chamber for accommodating a heat exchange medium, and the fourth heat exchange chamber communicates with the first heat exchange chamber.

In the foregoing technical solution, with the fourth thermal management component forming the fourth heat exchange chamber for accommodating the heat exchange medium, and the fourth heat exchange chamber communicating with the first heat exchange chamber, the fluidity of the heat exchange medium in the heat exchange chamber can be effectively improved, thereby further enhancing the heat exchange efficiency of the thermal management means. In addition, compared to an isolated heat exchange chamber structure, the plurality of fourth heat exchange chambers communicating with the plurality of first heat exchange chambers can reduce the number of fluid inlet and outlet structures, and in turn reduce the space occupied by the fluid inlet and outlet structures, helping to further increase the energy density of the battery.

According to some embodiments of this application, the thermal management means includes a first thermal management component and a second thermal management component, and the battery cell has two first surfaces disposed opposite each other in a first direction and two second surfaces disposed opposite each other in a second direction, where at least one of the first surfaces of the battery cell is thermally connected to the first thermal management component, and at least one of the second surfaces of the battery cell is thermally connected to the second thermal management component, the first direction being perpendicular to the second direction.

In the foregoing technical solution, at least one of the first surfaces and at least one of the second surfaces of the battery cell are thermally connected to the thermal management means, such that the battery cell can exchange heat through the two perpendicular surfaces, and in turn exchange heat in a plurality of directions, helping to improve the reliability of the heat exchange of the battery cell.

According to some embodiments of this application, the first thermal management component is provided in plurality, the plurality of first thermal management components are spaced apart in the first direction, and at least one of the battery cells is provided between adjacent two of the first thermal management components, where the two first surfaces of the battery cell are thermally connected to the two first thermal management components respectively.

In the foregoing technical solution, compared to the structure where the battery cell is sandwiched between two separately disposed adjacent first thermal management components, the plurality of battery cells arranged in the second direction sharing two first thermal management components can simplify the structure and production and mounting processes of the thermal management means, and reduce the number of first thermal management components, thereby decreasing the additional structures (for example, mounting and fixing structures) of the first thermal management components. This can reduce the space occupied by the additional structures of the first thermal management components while reducing the production costs of the battery, helping to increase the energy density of the battery.

According to some embodiments of this application, the second thermal management component is provided in plurality, the plurality of second thermal management components are spaced apart in the second direction, and at least one of the battery cells is provided between adjacent two of the second thermal management components, where the two second surfaces of the battery cell are thermally connected to the two second thermal management components respectively.

In the foregoing technical solution, the two second surfaces of the battery cell are thermally connected to the two second thermal management components respectively, such that the battery cell can exchange heat through the two second surfaces, further resulting in more uniform distribution of the heat exchange area of the battery cell, thereby helping to further enhance the performance stability of the battery.

According to some embodiments of this application, the first surface is a surface with a largest area of the battery cell.

In the foregoing technical solution, the first surface with the largest area of the battery cell being thermally connected to the first thermal management component can further increase the heat exchange area of the battery cell, allowing the thermal management means to have higher thermal management efficiency for the battery cell.

According to a second aspect, this application provides an electric apparatus including the battery according to any one of the foregoing embodiments, where the battery is configured to supply electric energy.

### BRIEF DESCRIPTION OF DRAWINGS

To describe the technical solutions in the embodiments of this application more clearly, the following briefly describes the accompanying drawings required for describing the embodiments of this application. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a schematic three-dimensional structural diagram of a battery according to some embodiments of this application;
FIG. 3 is a schematic structural diagram of a battery cell according to some embodiments of this application;
FIG. 4 is a schematic three-dimensional structural diagram of a battery according to some embodiments of this application;
FIG. 5 is a schematic exploded structural view of a battery according to some embodiments of this application;
FIG. 6 is a schematic three-dimensional structural diagram of a battery according to some embodiments of this application; and
FIG. 7 is a schematic three-dimensional structural diagram of a battery according to some embodiments of this application.

Reference signs: 1000. vehicle; 100. battery; 10. battery cell group; 11. battery cell; 111. first surface; 112. second surface; 113. third surface; 114. fourth surface; 115. electrode terminal; 20. thermal management means; 21. first thermal management component; 22. second thermal management component; 23. third thermal management component; 24. fourth thermal management component; 241. first thermal management sub-component; 242. second thermal management sub-component; 26. fluid collecting component; 200. controller; and 300. motor.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "have", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

In this application, reference to "embodiment" means that specific features, structures, or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

In this application, a battery cell may include a lithium-ion secondary battery, a lithium-ion primary battery, a lithium-sulfur battery, a sodium-ion battery, a magnesium-ion battery, or the like. This is not limited in the embodiments of this application. The battery cell may be flat, cuboid, or of other shapes. This is not limited in the embodiments of this application either.

The battery mentioned in the embodiments of this application is a single physical module that includes a plurality of battery cells for providing a higher voltage and capacity. For example, the battery mentioned in this application may include a battery module, a battery pack, or the like. The battery may typically further include a box for packaging one or more battery cells or a plurality of battery modules. The box can prevent a liquid or another foreign matter from affecting charging or discharging of the battery cells.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The electrode assembly may be a wound structure or a laminated structure, but the embodiments of this application are not limited thereto.

Due to outstanding advantages such as high energy density, low environmental pollution, high power density, long service life, wide application, and low self-discharge coefficient, batteries are an important part of modern new energy development. With the development of the new energy industry, batteries are gradually evolving toward larger sizes and greater integration.

However, when a large number of battery cells are stacked together, internal temperature control of the battery becomes crucial. Excessively high temperature may lead to thermal runaway of the battery, resulting in reduced power supply efficiency or even failure of the battery, and may also cause deformation of the battery, affecting safety and service life of the battery. Excessively low temperature may result in a sharp change in internal resistance of the battery, leading to reduced power supply efficiency or even failure of the battery, thereby affecting reliability and service life of the battery. Uneven temperature distribution can cause disparities between the battery cells to continue to widen, accelerating failure of the battery, thereby affecting the reliability and service life of the battery.

In some technologies, to reduce the impact of temperature on the battery, a thermal management component is disposed at the bottom of the battery cells to exchange heat with the battery cells, thereby alleviating the problems of the battery cells, namely excessively high temperature, excessively low temperature, and uneven temperature distribution among the battery cells.

However, the inventors have found that batteries with this structure occupy a large space and have poor heat exchange effect, making it impossible to meet the requirements of the market for the safety of batteries.

Based on the foregoing considerations, to effectively improve the safety of the battery, the inventors have designed a battery. The battery includes a battery cell group and a thermal management means. The battery cell group includes a plurality of battery cells, and at least two surfaces of the battery cell are thermally connected to the thermal management means. The thermal management means is configured to regulate temperature of the battery cell group.

In the technical solution of this application, at least two surfaces of the battery cell are thermally connected to the thermal management means, which can increase a heat exchange area of the battery cell, allowing the thermal management means to have higher thermal management efficiency for the battery cell. This in turn can meet the cooling requirements of the battery under higher current or faster charging conditions and meet the heating requirements of the battery in lower temperature environments, thereby improving the safety and service life of the battery.

The battery disclosed in the embodiments of this application may be used without limitation in electric apparatuses such as vehicles, ships, or aircrafts. The battery disclosed in this application may be used to constitute a power supply system of that electric apparatus.

An embodiment of this application provides an electric apparatus that uses a battery as a power source. The electric apparatus may be but is not limited to a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

The battery described in the embodiments of this application are applicable to not only the electric apparatuses described above but also all electric apparatuses that use batteries. However, for brevity of description, in the following embodiments, an electric apparatus being a vehicle is used as an example for description.

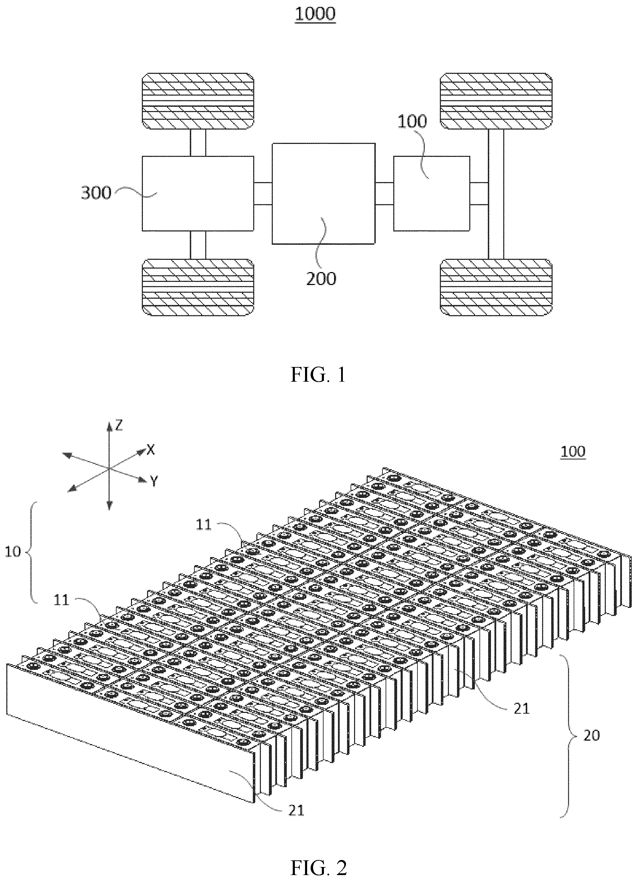

Referring to FIG. 1, FIG. 1 is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, where the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic three-dimensional structural diagram of a battery according to some embodiments of this application. Some embodiments of this application provide a battery 100 including a battery cell group 10 and a thermal management means 20. The battery cell group 10 includes a plurality of battery cells 11, and the thermal management means 20 is configured to regulate temperature of the battery cell group 10, where at least two surfaces of the battery cell 11 are thermally connected to the thermal management means 20.

In some embodiments, the battery cell 11 may be flat, cuboid, or of other shapes.

In some embodiments, in the battery cell group 10, the plurality of battery cells 11 may be connected in series, parallel, or series-parallel, where being connected in series-parallel means a combination of series and parallel connections of the plurality of battery cells 11. The plurality of battery cells 11 may be directly connected in series, parallel, or series-parallel. Certainly, the battery cell group 10 may alternatively be formed by a plurality of battery cells 11 being connected in series, parallel, or series-parallel first to form a battery cell group module and then a plurality of battery cell group modules being connected in series, parallel, or series-parallel to form an entirety. The battery 100 may further include a busbar configured to implement electrical connection between the plurality of battery cells 11.

At least two surfaces of the battery cell 11 being thermally connected to the thermal management means 20 can increase a heat exchange area of the battery cell 11, allowing the thermal management means 20 to have higher thermal management efficiency for the battery cell 11. This in turn can meet the cooling requirements of the battery 100 under higher current or faster charging conditions and meet the heating requirements of the battery 100 in lower temperature environments, thereby improving safety and service life of the battery 100.

In some embodiments, the thermal management means 20 may include a plurality of first thermal management components 21, the plurality of first thermal management components 21 are spaced apart in a first direction X, and at least one of the battery cells 11 is provided between adjacent two of the first thermal management components 21.

At least one of the battery cells 11 is sandwiched between adjacent two of the first thermal management components 21, such that the two adjacent first thermal management components 21 can limit and support the battery cell 11, reducing the probability of deformation caused by mutual compression of the plurality of battery cells 11. In addition, the first thermal management component 21 can also resist swelling of the battery cell 11, which is conducive to enhancing structural stability of the battery 100.

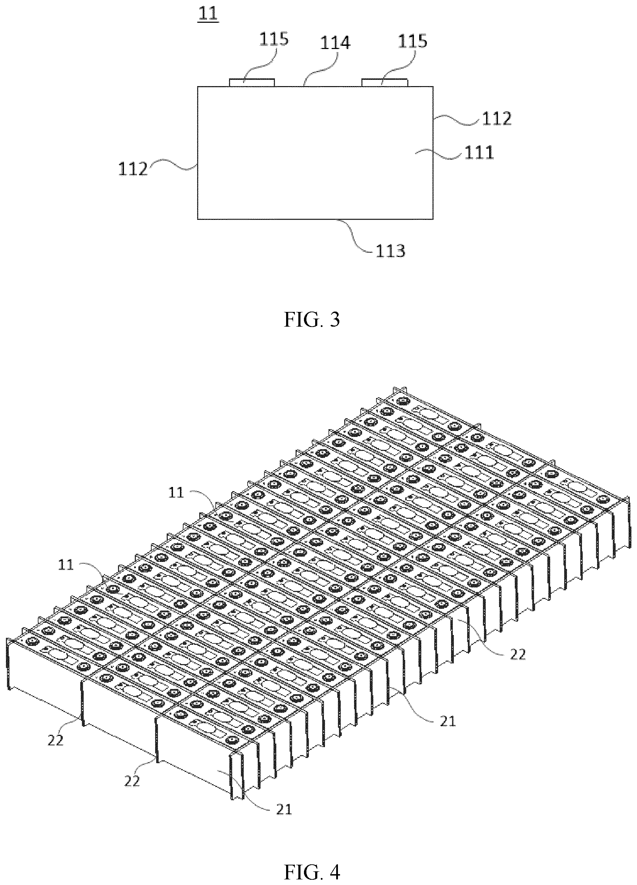

Referring to FIG. 3 together, FIG. 3 is a schematic structural diagram of a battery cell according to some embodiments of this application. In some embodiments, the battery cell 11 has two first surfaces 111 disposed opposite each other in the first direction X, and the two first surfaces 111 of the battery cell 11 are thermally connected to the two first thermal management components 21 respectively.

The two first surfaces 111 of the battery cell 11 are thermally connected to the two first thermal management components 21 respectively, such that the battery cell 11 can exchange heat through the two first surfaces 111, resulting in more uniform distribution of the heat exchange area, thereby helping to further enhance performance stability of the battery 100.

In other embodiments, a plurality of battery cells 11 may be provided between adjacent two of the first thermal management components 21. In other words, the battery cell 11 may have only one first surface 111 thermally connected to the first thermal management component 21, or the first surface 111 of the battery cell 11 is not thermally connected to the first thermal management component 21. This allows for denser arrangement of the battery cells 11, thereby increasing energy density of the battery 100.

A thermal insulation layer may be provided between two adjacent battery cells 11 that are not separated by the first thermal management component 21. The thermal insulation layer may be made of a material with low thermal conductivity, such as silicone, foamed plastic, mica, or ceramics. The thermal insulation layer provided can provide thermal insulation between the two adjacent battery cells 11, and can also limit and support the battery cells 11. When a single battery cell 11 undergoes thermal runaway, the thermal insulation layer can effectively reduce the risk of heat transfer from the battery cell 11 in thermal runaway to the adjacent battery cell 11, effectively reducing the risk of heat diffusion of the battery 100, thereby improving reliability of the battery 100.

In some embodiments, the first thermal management component 21 forms a first heat exchange chamber (not shown in the figure) for accommodating a heat exchange medium, and the first heat exchange chambers of the plurality of first thermal management components 21 communicate with each other.

The first heat exchange chamber is used to accommodate the heat exchange medium, and the heat exchange medium may be liquid or gas. In the case of cooling or lowering temperature of the battery cell 11, the first thermal management component 21 can be configured to accommodate a cooling medium to lower the temperature of the battery cell 11. In this case, the first thermal management component 21 may also be referred to as a cooling component, a cooling system, a cooling plate, or the like, and the heat exchange medium accommodated therein may also be referred to as a cooling medium, and more specifically, a cooling liquid or a cooling gas. In addition, the first thermal management component 21 can also be configured to heat the battery cell 11. This is not limited in the embodiments. For example, the first thermal management component 21 accommodates a cooling liquid to lower the temperature of the battery cell 11.

With the first thermal management component 21 forming the first heat exchange chamber for accommodating the heat exchange medium, and the first heat exchange chambers of the plurality of first thermal management components 21 communicating with each other, fluidity of the heat exchange medium in the heat exchange chamber can be effectively improved, thereby further enhancing heat exchange efficiency of the thermal management means 20. In addition, compared to an isolated heat exchange chamber structure, the plurality of first heat exchange chambers communicating with each other can reduce the number of fluid inlet and outlet structures, and in turn reduce space occupied by the fluid inlet and outlet structures, helping to further increase the energy density of the battery.

In some embodiments, a plurality of battery cells 11 arranged in a second direction Y are provided between adjacent two of the first thermal management components 21, the second direction Y being perpendicular to the first direction X.

Compared to the structure where the battery cell 11 is sandwiched between two separately disposed adjacent first thermal management components 21, the plurality of battery cells 11 arranged in the second direction Y sharing two first thermal management components 21 can simplify the structure and production and mounting processes of the thermal management means 20, and reduce the number of first thermal management components 21, thereby decreasing additional structures (for example, mounting and fixing structures) of the first thermal management components 21. This can reduce space occupied by the additional structures of the first thermal management components 21 while reducing production costs of the battery 100, helping to increase the energy density of the battery 100.

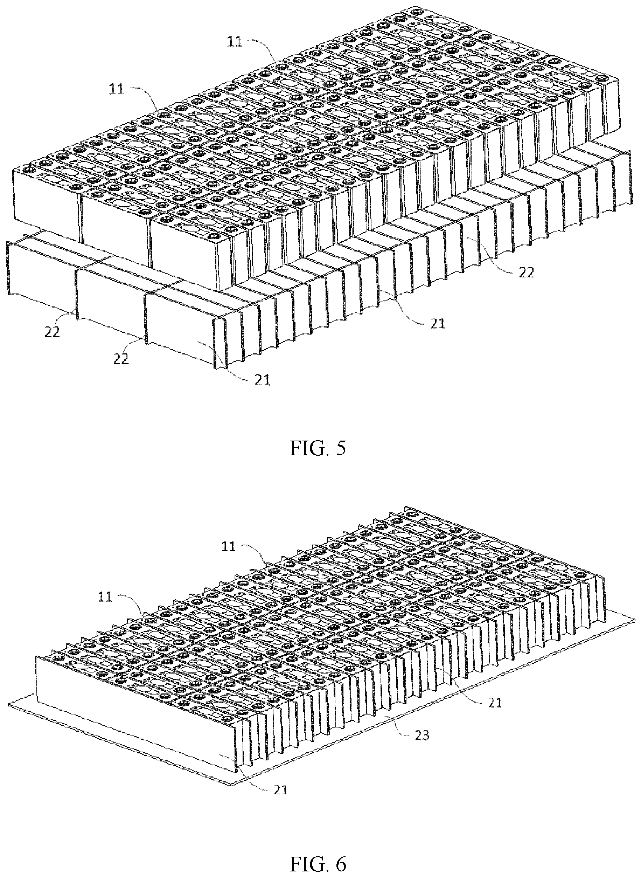

Referring to FIG. 4 and FIG. 5, FIG. 4 is a schematic three-dimensional structural diagram of a battery according to some embodiments of this application, and FIG. 5 is a schematic exploded structural view of a battery according to some embodiments of this application. In some embodiments, the thermal management means 20 may further include a plurality of second thermal management components 22, the plurality of second thermal management components 22 are spaced apart in the second direction Y, and at least one of the battery cells 11 is provided between adjacent two of the second thermal management components 22.

At least one of the battery cells 11 is sandwiched between adjacent two of the second thermal management components 22, such that the two adjacent second thermal management components 22 can limit and support the battery cell 11, reducing the probability of deformation caused by mutual compression of the plurality of battery cells 11. In addition, the second thermal management component 22 can also resist swelling of the battery cell 11, which is conducive to enhancing the structural stability of the battery 100.

In some embodiments, the battery cell 11 has two second surfaces 112 disposed opposite each other in the second direction Y, and the two second surfaces 112 of the battery cell 11 are thermally connected to the two second thermal management components 22 respectively.

The two second surfaces 112 of the battery cell 11 are thermally connected to the two second thermal management components 22 respectively, such that the battery cell 11 can exchange heat through the two second surfaces 112, further resulting in more uniform distribution of the heat exchange area of the battery cell 11, thereby helping to further enhance the performance stability of the battery 100.

In other embodiments, a plurality of battery cells 11 may be provided between adjacent two of the second thermal management components 22. In other words, the battery cell 11 may have only one second surface 112 thermally connected to the second thermal management component 22, or the second surface 112 of the battery cell 11 is not thermally connected to the second thermal management component 22. This allows for denser arrangement of the battery cells 11, thereby increasing the energy density of the battery 100.

A thermal insulation layer may be provided between two adjacent battery cells 11 that are not separated by the second thermal management component 22. The thermal insulation layer may be made of a material with low thermal conductivity, such as silicone, foamed plastic, mica, or ceramics. The thermal insulation layer provided can provide thermal insulation between the two adjacent battery cells 11, and can also limit and support the battery cells 11. When a single battery cell 11 undergoes thermal runaway, the thermal insulation layer can effectively reduce the risk of heat transfer from the battery cell 11 in thermal runaway to the adjacent battery cell 11, effectively reducing the risk of heat diffusion of the battery 100, thereby improving the reliability of the battery 100.

In some embodiments, the second thermal management component 22 forms a second heat exchange chamber (not shown in the figure) for accommodating a heat exchange medium, and the second heat exchange chamber communicates with the first heat exchange chamber.

With the second thermal management component 22 forming the second heat exchange chamber for accommodating the heat exchange medium, and the second heat exchange chamber communicating with the first heat exchange chamber, the fluidity of the heat exchange medium in the heat exchange chamber can be effectively improved, thereby further enhancing the heat exchange efficiency of the thermal management means 20. In addition, compared to an isolated heat exchange chamber structure, the plurality of second heat exchange chambers communicating with the plurality of first heat exchange chambers can reduce the number of fluid inlet and outlet structures, and in turn reduce the space occupied by the fluid inlet and outlet structures, helping to further increase the energy density of the battery.

Referring to FIG. 6, FIG. 6 is a schematic three-dimensional structural diagram of a battery according to some embodiments of this application. In some embodiments, the thermal management means 20 may further include a third thermal management component 23, and the third thermal management component 23 is disposed on a side of the battery cell group 10 in a third direction Z, the first direction X, the second direction Y, and the third direction Z being perpendicular to each other.

The third thermal management component 23 can correspond to all the battery cells 11 of the battery cell group 10 and support the battery cells 11.

In other embodiments, the third thermal management component 23 may be provided in plurality, and each third thermal management component 23 can correspond to one or more battery cells 11. This is not limited herein.

In some embodiments, the battery cell 11 has a third surface 113, and the third surface 113 of the battery cell 11 is thermally connected to the third thermal management component 23.

The third surface 113 of the battery cell 11 is thermally connected to the third thermal management component 23, such that the battery cell 11 can exchange heat through the third surface 113, further resulting in more uniform distribution of the heat exchange area of the battery cell 11, thereby helping to further enhance the performance stability of the battery 100.

In some embodiments, the third thermal management component 23 forms a third heat exchange chamber (not shown in the figure) for accommodating a heat exchange medium, and the third heat exchange chamber communicates with the first heat exchange chamber.

With the third thermal management component 23 forming the third heat exchange chamber for accommodating the heat exchange medium, and the third heat exchange chamber communicating with the first heat exchange chamber, the fluidity of the heat exchange medium in the heat exchange chamber can be effectively improved, thereby further enhancing the heat exchange efficiency of the thermal management means 20. In addition, compared to an isolated heat exchange chamber structure, the plurality of third heat exchange chambers communicating with the plurality of first heat exchange chambers can reduce the number of fluid inlet and outlet structures, and in turn reduce the space occupied by the fluid inlet and outlet structures, helping to further increase the energy density of the battery.

In some embodiments, the battery cell 11 further has a fourth surface 114, the fourth surface 114 and the third surface 113 are disposed opposite each other in the third direction Z, and an electrode terminal 115 of the battery cell 11 is disposed on the fourth surface 114.

The electrode terminal 115 is configured to output or input electric energy of the battery cell 11. Two electrode terminals 115 are a positive electrode terminal and a negative electrode terminal respectively, and the positive electrode terminal and the negative electrode terminal can be spaced apart on the fourth surface 114 of the battery cell 11. This facilitates interconnection of the electrode terminals 115 of the plurality of battery cells 11, helping to simplify manufacturing processes of the battery 100, and reducing manufacturing difficulty of the battery 100. In addition, the electrode terminal 115 being disposed on the fourth surface 114 of the battery cell 11 can effectively reduce the occupation of an accommodating space enclosed by the first thermal management component 21, the second thermal management component 22, and the third thermal management component 23 by the electrode terminal 115. The accommodating space can be used to accommodate a body portion of the battery cell 11 only, helping to increase the energy density of the battery 100.

The first surface 111, second surface 112, and third surface 113 of the battery cell 11 provided with no electrode terminal are thermally connected to the thermal management means 20 to exchange heat, which can reduce the impact of the electrode terminal 115 on the heat exchange between the battery cell 11 and the thermal management means 20.

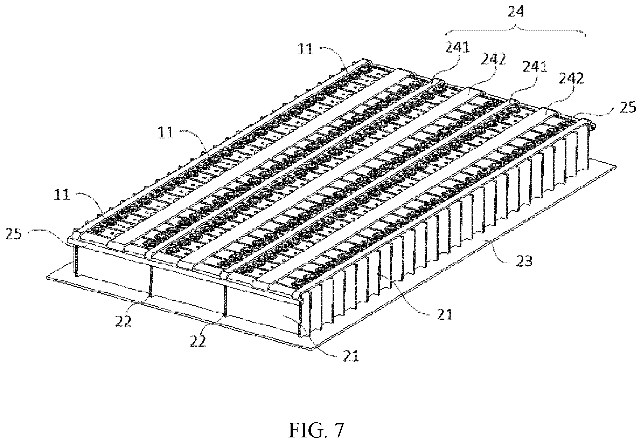

Referring to FIG. 7, FIG. 7 is a schematic three-dimensional structural diagram of a battery according to some embodiments of this application. In some embodiments, the thermal management means 20 may further include a plurality of fourth thermal management components 24, and the fourth thermal management component 24 is disposed on a side of the battery cell group 10 in a third direction Z, where the fourth surface 114 of the battery cell 11 is thermally connected to the fourth thermal management component 24.

The fourth surface 114 of the battery cell 11 is thermally connected to the fourth thermal management component 24, such that the battery cell 11 can exchange heat through the fourth surface 114, further resulting in more uniform distribution of the heat exchange area of the battery cell 11, thereby helping to further enhance the performance stability of the battery 100. In addition, the fourth thermal management component 24 can also fit with the third thermal management component 23 to limit the battery cell 11, and can resist swelling of the battery cell 11, which is conducive to enhancing the structural stability of the battery 100.

In some embodiments, observed along the third direction Z, the fourth thermal management component 24 does not overlap with the electrode terminal 115 of the battery cell 11.

Observed along the third direction Z, the fourth thermal management component 24 does not overlap with the electrode terminal 115 of the battery cell 11, such that the impact of the fourth thermal management component 24 on the connection between the electrode terminal 115 and other components can be reduced.

In some embodiments, a pressure relief mechanism (not shown in the figure) is provided on the fourth surface 114 of the battery cell 11, and observed along the third direction Z, the fourth thermal management component 24 does not overlap with the pressure relief mechanism.

With the pressure relief mechanism disposed on the battery cell 11, the pressure relief mechanism can open when internal pressure of the battery cell 11 is excessively high, to balance internal and external pressures of the battery cell 11. Observed along the third direction Z, the fourth thermal management component 24 does not overlap with the pressure relief mechanism, such that the impact of the fourth thermal management component 24 on the pressure relief of the pressure relief mechanism can be reduced, thereby reducing the impact on the safety of the battery 100.

In some embodiments, the fourth thermal management component 24 is provided in plurality, the fourth thermal management component 24 extends along the first direction, and the plurality of fourth thermal management components 24 are spaced apart in a second direction.

The plurality of fourth thermal management components 24 provided result in a larger heat exchange area of the fourth thermal management components 24 with the battery cells 11, allowing for higher heat exchange efficiency.

In some embodiments, the fourth thermal management component 24 may include a first thermal management sub-component 241 and a second thermal management sub-component 242. A projection of the first thermal management sub-component 241 in the third direction Z falls within projections of two adjacent battery cells 11 in the second direction Y in the third direction Z. A projection of the second thermal management sub-component 242 in the third direction Z falls between projections of the two electrode terminals 115 in the third direction Z.

The projection of the first thermal management sub-component 241 in the third direction Z falls within the projections of the two adjacent battery cells 11 in the second direction Y in the third direction Z, such that the two adjacent battery cells 11 can both exchange heat through the first thermal management sub-component 241, further enhancing the heat exchange efficiency of the thermal management means 20.

The projection of the second thermal management sub-component 242 in the third direction Z falls between the projections of the two electrode terminals 115 in the third direction Z, such that the battery cell 11 can fully exchange heat through the second thermal management sub-component 242, further enhancing the heat exchange efficiency of the thermal management means 20.

In some embodiments, the first thermal management sub-component 241 and the second thermal management sub-component 242 may both be provided in plurality, and the plurality of first thermal management sub-components 241 and the plurality of second thermal management sub-components 242 may be staggered and spaced apart.

In some embodiments, the thermal management means 20 may further include a fluid collecting component 26, and the fluid collecting component 26 connects the plurality of fourth thermal management components 24.

With the fluid collecting component 26 connecting the plurality of fourth thermal management components 24, the structure of the plurality of fourth thermal management components 24 can be more stable, resulting in higher overall structural strength of the battery 100.

In some embodiments, the fourth thermal management component 24 forms a fourth heat exchange chamber (not shown in the figure) for accommodating a heat exchange medium, and the fluid collecting component 26 forms a fluid collecting chamber (not shown in the figure) for accommodating a heat exchange medium, where the fourth heat exchange chamber communicates with the fluid collecting chamber.

With the fourth heat exchange chambers of the plurality of fourth thermal management components 24 communicating with the fluid collecting chamber of the fluid collecting component 26, the fluidity of the heat exchange medium in the heat exchange chamber can be effectively improved, thereby further enhancing the heat exchange efficiency of the thermal management means 20. In addition, compared to an isolated heat exchange chamber structure, the plurality of fourth heat exchange chambers communicating with the fluid collecting chamber can reduce the number of fluid inlet and outlet structures, and in turn reduce the space occupied by the fluid inlet and outlet structures, helping to further increase the energy density of the battery.

In some embodiments, an extension direction of the fluid collecting component 26 is perpendicular to the extension direction of the fourth thermal management component 24, so that the fluid collecting component 26 can be connected to end portions of the plurality of fourth thermal management components 24.

In some embodiments, the fluid collecting component 26 is provided in two, the two fluid collecting components 26 are spaced apart in the first direction X, and two ends of the fourth thermal management component 24 are connected to the two fluid collecting components 26 respectively.

With the two fluid collecting components 26 provided, the two ends of the fourth thermal management component 24 can be connected to the two fluid collecting components 26 respectively, which can further improve the fluidity of the heat exchange medium in the heat exchange chamber, thereby further enhancing the heat exchange efficiency of the thermal management means 20.

In some embodiments, the fourth heat exchange chamber of the fourth thermal management component 24 communicates with the first heat exchange chamber of the first thermal management component 21.

With the fourth heat exchange chamber of the fourth thermal management component 24 communicating with the first heat exchange chamber of the first thermal management component 21, the fluidity of the heat exchange medium in the heat exchange chamber can be effectively improved, thereby further enhancing the heat exchange efficiency of the thermal management means 20. In addition, compared to an isolated heat exchange chamber structure, the plurality of fourth heat exchange chambers communicating with the plurality of first heat exchange chambers can reduce the number of fluid inlet and outlet structures, and in turn reduce the space occupied by the fluid inlet and outlet structures, helping to further increase the energy density of the battery.

In some embodiments, the first thermal management component 21, the second thermal management component 22, the third thermal management component 23, and the fourth thermal management component 24 may be a plate-shaped structure, with their thickness directions being perpendicular to the surfaces of the battery cell 11 to which they are thermally connected. This can effectively increase the effective action area of the thermal management components, thereby further improving the heat exchange effect of the thermal management components on the battery cell 11.

In other embodiments, the first thermal management component 21, the second thermal management component 22, the third thermal management component 23, and the fourth thermal management component 24 may alternatively be a structure of any shape, such as tubular, with a chamber for accommodating a heat exchange medium. Their shapes can be adaptively adjusted according to the shape and structure requirements of the battery 100, the shape of the battery cell 11, and the like.

The first thermal management component 21, the second thermal management component 22, the third thermal management component 23, and the fourth thermal management component 24 may be made of a material with good thermal conductivity performance, for example, a metal material such as aluminum or copper.

The first thermal management component 21, the second thermal management component 22, the third thermal management component 23, and the fourth thermal management component 24 further form inlets and outlets communicating with the heat exchange chambers. The heat exchange medium can enter the thermal management components via the inlets and be discharged from the thermal management components via the outlets, which strengthens the circulation of the heat exchange medium in the thermal management components and the replacement of the heat exchange medium, thereby improving the heat exchange effect of the thermal management components.

Referring to FIG. 2, some embodiments of this application provide a battery 100 including a battery cell group 10 and a thermal management means 20. The battery cell group 10 includes a plurality of battery cells 11, and the thermal management means 20 is configured to regulate temperature of the battery cell group 10, where at least two surfaces of the battery cell 11 are thermally connected to the thermal management means 20.

In some embodiments, the thermal management means 20 may include a first thermal management component 21 and a second thermal management component 22, and the battery cell 11 has two first surfaces 111 disposed opposite each other in a first direction X and two second surfaces 112 disposed opposite each other in a second direction Y, where at least one of the first surfaces 111 of the battery cell 11 is thermally connected to the first thermal management component 21, and at least one of the second surfaces 112 of the battery cell 11 is thermally connected to the second thermal management component 22, the first direction X being perpendicular to the second direction Y.

At least one of the first surfaces 111 and at least one of the second surfaces 112 of the battery cell 11 are thermally connected to the thermal management means 20, such that the battery cell 11 can exchange heat through the two perpendicular surfaces, and in turn exchange heat in a plurality of directions, helping to improve the reliability of the heat exchange of the battery cell 11.

In some embodiments, the first thermal management component 21 is provided in plurality, the plurality of first thermal management components 21 are spaced apart in the first direction X, and at least one of the battery cells 11 is provided between adjacent two of the first thermal management components 21, where the two first surfaces 111 of the battery cell 11 are thermally connected to the two first thermal management components 21 respectively.

Compared to the structure where the battery cell 11 is sandwiched between two separately disposed adjacent first thermal management components 21, the plurality of battery cells 11 arranged in the second direction Y sharing two first thermal management components 21 can simplify the structure and production and mounting processes of the thermal management means 20, and reduce the number of first thermal management components 21, thereby decreasing the additional structures (for example, mounting and fixing structures) of the first thermal management components 21. This can reduce the space occupied by the additional structures of the first thermal management components 21 while reducing the production costs of the battery, helping to increase the energy density of the battery 100.

In some embodiments, the second thermal management component 22 is provided in plurality, the plurality of second thermal management components 22 are spaced apart in the second direction Y, and at least one of the battery cells 11 is provided between adjacent two of the second thermal management components 22, where the two second surfaces 112 of the battery cell 11 are thermally connected to the two second thermal management components 22 respectively.

The two second surfaces 112 of the battery cell 11 are thermally connected to the two second thermal management components 22 respectively, such that the battery cell 11 can exchange heat through the two second surfaces 112, further resulting in more uniform distribution of the heat exchange area of the battery cell 11, thereby helping to further enhance the performance stability of the battery 100.

In some embodiments, the first surface 111 is a surface with a largest area of the battery cell 11.

The first surface 111 with the largest area of the battery cell 11 being thermally connected to the first thermal management component 21 can further increase the heat exchange area of the battery cell 11, allowing the thermal management means 20 to have higher thermal management efficiency for the battery cell 11.

In some embodiments, the third heat exchange chamber of the third thermal management component 23 may include a plurality of flow channels, and the flow channels in the middle of the third thermal management component 23 have greater width than the flow channels in other portions of the third thermal management component 23.

The plurality of flow channels may be channels arranged in parallel or in S-shaped.

The flow channels in the middle of the third thermal management component 23 have greater width than the flow channels in other portions of the third thermal management component 23, such that the heat exchange medium via the flow channels in the middle of the third thermal management component 23 has greater flow rate than the heat exchange medium via the flow channels in other portions of the third thermal management component 23. This results in better heat exchange effect of the middle of the third thermal management component 23 on the middle of the battery cell group 10, thereby alleviating the problem of the middle of the battery cell group 10 being more prone to overheating.

In some embodiments, the first thermal management component 21 may have smaller thickness than at least one of the second thermal management component 22, the third thermal management component 23, and the fourth thermal management component 24.

After used for a period of time, the battery cell 11 may swell and is likely to start swelling from the first surface with the largest area of the battery cell 11. Therefore, the first thermal management component 21 having smaller thickness than at least one of the second thermal management component 22, the third thermal management component 23, and the fourth thermal management component 24 allows the first thermal management component 21 to deform under force, so as to reserve space for swelling of the battery cell 11.

In some embodiments, at least one of the first thermal management component 21, the second thermal management component 22, the third thermal management component 23, and the fourth thermal management component 24 is connected to the battery cell 11 through a thermally conductive adhesive.

With at least one of the first thermal management component 21, the second thermal management component 22, the third thermal management component 23, and the fourth thermal management component 24 being connected to the battery cell 11 through the thermally conductive adhesive, the heat exchange effect between the thermal management means 20 and the battery cell 11 can be further improved, and the thermal management means 20 can better limit and support the battery cell 11, which is conducive to further enhancing the structural stability of the battery 100. In addition, the thermally conductive adhesive can also buffer the swelling and deformation of the battery cell 11, helping to further improve the safety of the battery 100.

In some embodiments, the first thermal management component 21, the second thermal management component 22, and the third thermal management component 23 may be integrally formed.

The first thermal management component 21, the second thermal management component 22, and the third thermal management component 23 being integrally formed can further enhance structural strength of the thermal management means 20 and is conducive to simplifying assembly processes of the battery 100.

Some embodiments of this application provide an electric apparatus including the battery 100 according to any one of the foregoing embodiments, where the battery 100 is configured to supply electric energy.

The electric apparatus may be any one of the foregoing systems or devices that use the battery 100.

Referring to FIG. 3 and FIG. 6, some embodiments of this application provide a battery 100. The battery 100 includes a battery cell group 10 and a thermal management means 20. The battery cell group 10 includes a plurality of battery cells 11, and the thermal management means 20 includes a plurality of first thermal management components 21, a plurality of second thermal management components 22, a third thermal management component 23, and a plurality of fourth thermal management components 24. The plurality of battery cells 11 are arranged in a matrix in a first direction X and a second direction Y. The plurality of first thermal management components 21 are staggered with the plurality of battery cells 11 in the first direction X, the plurality of second thermal management components 22 are staggered with the plurality of battery cells 11 in the second direction Y, the third thermal management component 23 is disposed on a side of the battery cell group 10 in a third direction Z, and the plurality of fourth thermal management components 24 are disposed on the other side of the battery cell group 10 in the third direction Z. The fourth thermal management component 24 includes a first thermal management sub-component 241 and a second thermal management sub-component 242, the first thermal management sub-component 241 is disposed at edges of two adjacent battery cells 11 in the second direction Y, and the second thermal management sub-component 242 is disposed between two electrode terminals 115 of the battery cell 11.

The first thermal management component 21 is plate-shaped, with its thickness direction being parallel to the first direction X. The second thermal management component 22 is plate-shaped, with its thickness direction being parallel to the second direction Y. The third thermal management component 23 is plate-shaped, with its thickness direction being parallel to the third direction Z. The fourth thermal management component 24 is plate-shaped, with its thickness direction being parallel to the third direction Z. The first direction X, the second direction Y, and the third direction Z are perpendicular to each other.

The first thermal management component 21, the second thermal management component 22, and the third thermal management component 23 are fixedly connected, the fourth thermal management component 24 is fixedly connected to end surfaces of the first thermal management component 21 and the second thermal management component 22 in the third direction Z, and the plurality of fourth thermal management components 24 are connected through a fluid collecting component 26.

The first thermal management component 21, the second thermal management component 22, the third thermal management component 23, and the fourth thermal management component 24 are each connected to the battery cell 11 through a thermally conductive adhesive.

The first thermal management component 21, the second thermal management component 22, the third thermal management component 23, and the fourth thermal management component 24 each form a heat exchange chamber for accommodating a heat exchange medium. The heat exchange chambers of the first thermal management component 21, the second thermal management component 22, the third thermal management component 23, and the fourth thermal management component 24 communicate with each other.

The heat exchange chamber of the third thermal management component 23 includes a plurality of flow channels, and the flow channels in the middle of the third thermal management component 23 have greater width than the flow channels in other portions of the third thermal management component 23.

The first thermal management component 21 has smaller thickness than the second thermal management component 22, the third thermal management component 23, and the fourth thermal management component 24.

It should be noted that in absence of conflicts, the embodiments and features in the embodiments in this application may be combined with each other.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery, **characterized by** comprising:
a battery cell group comprising a plurality of battery cells; and
a thermal management means configured to regulate temperature of the battery cell group;
wherein at least two surfaces of the battery cell are thermally connected to the thermal management means.

2. The battery according to claim 1, **characterized in that** the thermal management means comprises a plurality of first thermal management components, the plurality of first thermal management components are spaced apart in a first direction, and at least one of the battery cells is provided between adjacent two of the first thermal management components; wherein
the battery cell has two first surfaces disposed opposite each other in the first direction, and the two first surfaces of the battery cell are thermally connected to the two first thermal management components respectively.

3. The battery according to claim 2, **characterized in that** the first thermal management component forms a first heat exchange chamber for accommodating a heat exchange medium, and the first heat exchange chambers of the plurality of first thermal management components communicate with each other.

4. The battery according to claim 2, **characterized in that** a plurality of battery cells arranged in a second direction are provided between adjacent two of the first thermal management components, the second direction being perpendicular to the first direction.

5. The battery according to claim 4, **characterized in that** the thermal management means further comprises a plurality of second thermal management components, the plurality of second thermal management components are spaced apart in the second direction, and at least one of the battery cells is provided between adjacent two of the second thermal management components; wherein
the battery cell has two second surfaces disposed opposite each other in the second direction, and the two second surfaces of the battery cell are thermally connected to the two second thermal management components respectively.

6. The battery according to claim 5, **characterized in that** the first thermal management component forms a first heat exchange chamber for accommodating a heat exchange medium, the second thermal management component forms a second heat exchange chamber for accommodating a heat exchange medium, and the second heat exchange chamber communicates with the first heat exchange chamber.

7. The battery according to claim 2, **characterized in that** the thermal management means further comprises a third thermal management component, and the third thermal management component is disposed on a side of the battery cell group in a third direction, the third direction being perpendicular to the first direction; wherein
the battery cell has a third surface, and the third surface of the battery cell is thermally connected to the third thermal management component.

8. The battery according to claim 7, **characterized in that** the first thermal management component forms a first heat exchange chamber for accommodating a heat exchange medium, the third thermal management component forms a third heat exchange chamber for accommodating a heat exchange medium, and the third heat exchange chamber communicates with the first heat exchange chamber.

9. The battery according to claim 8, **characterized in that** the battery cell further has a fourth surface, the fourth surface and the third surface are disposed opposite each other in the third direction, and an electrode terminal of the battery cell is disposed on the fourth surface.

10. The battery according to claim 2, **characterized in that** the battery cell further has a fourth surface, and an electrode terminal of the battery cell is disposed on the fourth surface; and the thermal management means further comprises a fourth thermal management component, and the fourth thermal management component is disposed on a side of the battery cell group in a third direction, wherein the fourth surface of the battery cell is thermally connected to the fourth thermal management component, the third direction being perpendicular to the first direction.

11. The battery according to claim 10, **characterized in that** observed along the third direction, the fourth thermal management component does not overlap with the electrode terminal of the battery cell.

12. The battery according to claim 10, **characterized in that** a pressure relief mechanism is provided on the fourth surface of the battery cell, and observed along the third direction, the fourth thermal management component does not overlap with the pressure relief mechanism.

13. The battery according to claim 10, **characterized in that** the fourth thermal management component is provided in plurality, the fourth thermal management component extends along the first direction, and the plurality of fourth thermal management components are spaced apart in a second direction, the first direction, the second direction, and the third direction being perpendicular to each other.

14. The battery according to claim 13, **characterized in that** the thermal management means further comprises a fluid collecting component, the fluid collecting component connects the plurality of fourth thermal management components, the fourth thermal management component forms a fourth heat exchange chamber for accommodating a heat exchange medium, and the fluid collecting component forms a fluid collecting chamber for accommodating a heat exchange medium, wherein the fourth heat exchange chamber communicates with the fluid collecting chamber.

15. The battery according to claim 14, **characterized in that** the fluid collecting component is provided in two, the two fluid collecting components are spaced apart in the first direction, and two ends of the fourth thermal management component are connected to the two fluid collecting components respectively.

16. The battery according to claim 10, **characterized in that** the first thermal management component forms a first heat exchange chamber for accommodating a heat exchange medium, the fourth thermal management component forms a fourth heat exchange chamber for accommodating a heat exchange medium, and the fourth heat exchange chamber communicates with the first heat exchange chamber.

17. The battery according to claim 1, **characterized in that** the thermal management means comprises a first thermal management component and a second thermal management component, and the battery cell has two first surfaces disposed opposite each other in a first direction and two second surfaces disposed opposite each other in a second direction, wherein at least one of the first surfaces of the battery cell is thermally connected to the first thermal management component, and at least one of the second surfaces of the battery cell is thermally connected to the second thermal management component, the first direction being perpendicular to the second direction.

18. The battery according to claim 17, **characterized in that** the first thermal management component is provided in plurality, the plurality of first thermal management components are spaced apart in the first direction, and at least one of the battery cells is provided between adjacent two of the first thermal management components, wherein the two first surfaces of the battery cell are thermally connected to the two first thermal management components respectively.

19. The battery according to claim 17, **characterized in that** the second thermal management component is provided in plurality, the plurality of second thermal management components are spaced apart in the second direction, and at least one of the battery cells is provided between adjacent two of the second thermal management components, wherein the two second surfaces of the battery cell are thermally connected to the two second thermal management components respectively.

20. The battery according to claim 2 or 17, **characterized in that** the first surface is a surface with a largest area of the battery cell.

21. An electric apparatus, **characterized by** comprising the battery according to any one of claims 1 to 20, wherein the battery is configured to supply electric energy.
